# EUROPÄISCHE PATENTANMELDUNG

(11) **EP 4 609 947 A1**
(43) Veröffentlichungstag der Anmeldung: **03.09.2025**
(21) Anmeldenummer: 25160460.9
(22) Anmeldetag: 27.02.2025
(51) Int. Cl.: B01J 2/00, B01F 23/30, B01F 23/60, B01F 27/921, B01J 35/45, B01J 37/04

(54) **VORRICHTUNG UND VERFAHREN ZUR BELADUNG PARTIKULÄRER SCHÜTTGÜTER MIT NANOPARTIKELN AUS EINEM TRÄGERGASSTROM**

(30) Priorität: 27.02.2024 DE 102024105425
(71) Anmelder: Forschungszentrum Jülich GmbH, 52428 Jülich (DE)
(72) Erfinder: Meißner, Jan, 52441 Linnich (DE); Häusler, Johannes, 85368 Moosburg (DE); Pasel, Dr. Joachim, 52428 Jülich (DE); Peters, Prof. Dr. Ralf, 52146 Würselen (DE)
(74) Vertreter: Michalski Hüttermann & Partner Patentanwälte mbB

(57) **Zusammenfassung**

Die vorliegende Erfindung betrifft eine Vorrichtung und ein Verfahren zur Beladung partikulärer Schüttgüter mit Nanopartikeln aus einem nanopartikelbeladenen Trägergasstrom. Die Vorrichtung umfasst ein tubuläres Reaktorgehäuses mit einer innerhalb des Reaktorgehäuses angeordnete Umwälzvorrichtung, wobei die Umwälzvorrichtung eine rotierbare Welle und ein oder mehrere in unterschiedlichen axialen Höhen an der Welle angeordnete Mischblätter aufweist, sowie mindestens einen Trägergaseinlass und einen Trägergasauslass. Des Weiteren betrifft die vorliegende Erfindung die Verwendung des erfindungsgemäßen Verfahrens zur Herstellung von mit Nanopartikeln an der Oberfläche beladener Partikel.

## Beschreibung

Die vorliegende Erfindung betrifft eine Vorrichtung und ein Verfahren zur Beladung partikulärer Schüttgüter mit Nanopartikeln aus einem nanopartikelbeladenen Trägergasstrom. Die Vorrichtung umfasst ein tubuläres Reaktorgehäuse mit einer innerhalb des Reaktorgehäuses angeordnete Umwälzvorrichtung, wobei die Umwälzvorrichtung eine rotierbare Welle und ein oder mehrere in unterschiedlichen axialen Höhen an der Welle angeordnete Mischblätter aufweist, sowie mindestens einen Trägergaseinlass und einen Trägergasauslass. Des Weiteren betrifft die vorliegende Erfindung die Verwendung des erfindungsgemäßen Verfahrens zur Herstellung von mit Nanopartikeln an der Oberfläche beladener Partikel.

Die effiziente Funktionalisierung von Partikeln durch eine zusätzliche Ausrüstung der Partikeloberfläche mit weiteren Substanzen ist in der technischen Umsetzung nicht trivial. Dies ergibt sich insbesondere in den Fällen, in denen ein signifikanter Größenunterschied im Bereich mehrerer Zehnerpotenzen zwischen den Partikeln und der zusätzlichen Funktionalisierung besteht und eine homogene und dauerhafte Anhaftung, ohne chemische Mittel, auf rein physikalischem Wege erreicht werden muss. Eine derartige Situation ergibt sich insbesondere für eine Abscheidung von Nanopartikeln auf Partikeln mit einer durchschnittlichen Größe im unteren Millimeterbereich. Diese Substanzen können in vielen Bereichen der Forschung und Industrie eingesetzt werden und gilt als besonders herausfordernd, da Verfahren und Vorrichtungen gefunden werden müssen, welche sowohl eine homogene Aufbringung der Nanopartikel als auch eine Konservierung des erreichten Beschichtungsergebnisses über den gesamten Prozess, ohne Zerstörung der einmal erhaltenen Abscheidung, ermöglichen. Für eine wirtschaftliche Herstellung der geträgerten Katalysatoren ist dabei sowohl eine homogene, schnelle wie auch steuerbare Beladung wichtig. Unter der Randbedingung der schnellen Herstellung kann man versuchen, diese durch eine hohe Beladung des Trägergasstroms mit Nanopartikeln zu erreichen. Nachteiligerweise kann eine hohe Beladung des Trägergasstroms zu einer ungleichmäßigen Beladung der Partikeloberflächen insgesamt, zu ungewollten Verlusten durch nicht abgelagerte Nanopartikel im Trägergasstrom und zu einem beschleunigten, unerwünschten Partikelwachstum der Nanopartikel im Trägergasstrom vor der Ablagerung führen. Diese Faktoren führen unnötigerweise zu einer deutlichen Verteuerung der Herstellung funktionalisierter Partikel.

Auch in der Patentliteratur finden sich die unterschiedlichsten Ansätze zur Beladung von Partikeln.

So beschreibt beispielsweise die EP 0 453 674 B1 ein Verfahren zur Herstellung von Katalysatoren, bei dem eine katalytisch wirksame Menge Kobalt als Schicht auf der peripheren Außenoberfläche eines teilchenförmigen, porösen anorganischen Oxidträgers verteilt wird, um einen Katalysator zu bilden, der für die Umwandlung von Synthesegas zu Kohlenwasserstoffen brauchbar ist, und die Trägerteilchen mit einem Spray in Kontakt gebracht werden, das eine zersetzbare Verbindung aus dem Metall oder Metallen enthält, wobei das Verfahren die Aufrechterhaltung eines Bettes der Trägerteilchen in aufgewirbeltem Zustand bei einer Temperatur im Bereich von etwa 50°C bis etwa 100°C durch Kontakt mit einem Gas bei einer Temperatur im Bereich von etwa 50°C bis etwa 100°C; die Besprühung des Bettes aus den erhitzten Trägerteilchen mit einer Flüssigkeit umfasst, in der eine Verbindung oder Verbindungen von Kobalt dispergiert ist/sind, mit einer Fließrate, die zur Lieferung eines Verhältnisses der Fließrate der Flüssigkeit : Fließrate des aufwirbelnden Gases unter etwa 0,6 g Flüssigkeit/Fuß³ (0,6 g/28,32 1) aufwirbelndes Gas ausreicht, um auf den Teilchen eine Oberflächenschicht aus dem Metall mit einer durchschnittlichen Dicke im Bereich von etwa 20 Mikron (20 µm) bis etwa 250 Mikron (250 µm) zu bilden, wobei die als metallisches Metall pro gepacktes Schüttvolumen des Katalysators berechnete Beladung aus dem Metall im Bereich von etwa 0,01 g/cm³ bis etwa 0,15 g/cm³ liegt.

In der EP2045011B1 ist ein Verfahren zur Herstellung eines Abgasreinigungskatalysators beschrieben. Das Verfahren umfasst: (a) Bereitstellen einer kolloidalen Lösung, die ein kolloidales Teilchen aus Seltenerdhydroxid oder -oxid enthält, (b) Zugeben eines Zirkondioxid basierenden Metalloxidteilchens zu der kolloidalen Lösung, um zu verursachen, dass das kolloidale Teilchen auf die Oberfläche des Zirkondioxid basierenden Metalloxidteilchens adsorbiert und geladen wird, (c) Trocknen und Brennen des Zirkondioxid basierenden Metalloxidteilchens mit dem darauf adsorbierten und geladenen kolloidalen Teilchen, um ein Katalysatorträgerteilchen zu erhalten, und (d) Laden von Rhodium auf das Katalysatorträgerteilchen.

Derartige aus dem Stand der Technik bekannte Lösungen können noch weiteres Verbesserungspotential bieten. Dies bezieht sich insbesondere auf die Bereitstellung einer Vorrichtung und eines Verfahrens, mit denen chemisch und physikalisch sehr homogene und genau definierte Partikel sehr gleichmäßig und schnell aus einem Gasstrom mit Nanopartikeln beladen werden können.

Es ist daher die Aufgabe der vorliegenden Erfindung, die aus dem Stand der Technik bekannten Nachteile zumindest teilweise zu überwinden. Es ist insbesondere die Aufgabe der vorliegenden Erfindung eine Vorrichtung bereitzustellen, welche eine gleichmäßige und schnelle Beladung von Partikeloberflächen mit nanopartikulären Substanzen aus einem Gasstrom ermöglicht. Des Weiteren ist es die Aufgabe der vorliegenden Erfindung ein Verfahren zur nanopartikulären Gasphasenbeladung von Partikeln bereitzustellen.

Erfindungsgemäß ist dementsprechend eine Vorrichtung zur Abscheidung von Nanopartikeln aus einem nanopartikelbeladenen Trägergasstrom auf ein partikuläres Schüttgut, wobei die Vorrichtung mindestens umfasst:
a) ein tubuläres Reaktorgehäuse aufweisend einen unteren Reaktorboden, einen oberen Reaktordeckel und eine den Reaktorboden mit dem Reaktordeckel verbindende Reaktorwand;
b) eine innerhalb des Reaktorgehäuses angeordnete Umwälzvorrichtung, wobei die Umwälzvorrichtung eine rotierbare Welle und ein oder mehrere in unterschiedlichen axialen Höhen an der Welle angeordnete Mischblätter aufweist, wobei die Mischblätter dazu eingerichtet sind das partikuläre Schüttgut sowohl axial wie auch radial innerhalb des Reaktorgehäuses zu durchmischen;
c) mindestens einen Trägergaseinlass und mindestens einen Trägergasauslass, wobei der mit Nanopartikeln beladene Trägergasstrom durch den Trägergaseinlass in das Reaktorgehäuse hineingeleitet und der von Nanopartikeln entreicherte Trägergasstrom das Reaktorgehäuse durch den Trägergasauslass wieder verlässt, wobei der Trägergaseinlass im unteren Drittel des tubulären Reaktorgehäuses und der Trägergasauslass in der oberen Hälfte des tubulären Reaktorgehäuses angeordnet ist.

Überaschenderweise wurde gefunden, dass sich mittels der Vorrichtung mit den oben angegebenen Merkmalen, eine Vielzahl unterschiedlich großer und unterschiedlich geformter Partikel sehr schnell und gleichmäßig mit Nanopartikeln beschichten lassen. Es ergeben sich weiter funktionalisierte Partikel mit einem gleichmäßigen Aktivitätsprofil, welches über eine sehr reproduzierbare Nanopartikelbeschichtung der Partikeloberfläche erhalten wurde. Der Ausnutzungsrad der in dem Trägergas enthaltenen Nanopartikel ist sehr hoch, sodass die restliche Nanopartikelbeladung des Trägergases nach dem Absorptionsschritt in dem Reaktor äußerst gering ist oder gar ganz entfällt. Zudem kann im Vergleich zu den aus dem Stand-der-Technik bekannten Verfahren prinzipiell auch die Beladung des Trägergases erhöht werden. Alternativ können auch mit geringeren Trägergasmengen vollständigere und gleichzeitig homogenere Beladungen erreicht werden. Diese Vorteile erhält man insbesondere dadurch, dass die noch unbeladenen Partikel in der Vorrichtung bewegt werden und eine sehr spezifische Kontaktierung des beladenen Trägergases mit der bewegten Partikelschüttung erfolgt. Die Beladungsvorrichtung weist insbesondere gegenüber der standardmäßig angewandten Tiefenfiltration besondere Vorteile auf. Die Tiefenfiltration ist eine gängige Methode, um aus mobilen Phasen, beispielsweise wässrige oder gasförmige stationäre Phasen, Feststoffpartikel, Flüssigkeitstropfen oder gasförmige Moleküle auf einer wässrigen oder festen Phase abzuscheiden. Das Prinzip wird beispielsweise in Atemschutzgeräten, Gasaufbereitungsanlagen oder Aktivkohlefiltern angewendet. Hierfür wird üblicherweise ein pulverförmiges oder pelletiertes Material mit großer Oberfläche stationär von dem zu befreienden Gas durchströmt, wodurch auf der großen Oberfläche die Tröpfchen, Gasmoleküle oder Partikel abgeschieden werden. Der Nachteil dieses Vorgehens zur Abscheidung von Nanopartikeln ist, dass nur sehr geringe Mengen an Partikeln abgeschieden werden, während eine große Anzahl der Partikel im Gasstrom verbleibt. Zudem lassen sich die Partikel nicht auf beliebige Materialien oder Formkörpern abscheiden. Somit eignet sich die Tiefenfiltration in einer unbewegten Variante nicht zur Abscheidung von Nanopartikeln, da in dieser nur inhomogene Abscheidungen erreichbar sind. Dies zeigt sich durch eine Anreicherung abgeschiedener Partikel am Anfang der Schüttung und einem starken Konzentrationsgefälle, mit geringen Beladungen zum Ende der Schüttung. Auch zeigt eine Herstellung über nasschemische Verfahren deutliche Nachteile. Die nasschemischen Verfahren verlangen eine hohe Anzahl einzelner Syntheseschritte (Imprägnierung, Fällung, Waschen, Filtrieren, Kalzinieren, Reduzieren) und weisen eine eingeschränkte Vielseitigkeit in der Synthese auf. Letztere erschwert die Kombination verschiedenen Materialien. Außerdem weisen nasschemische Verfahren den Nachteil von Anreicherungen oder Abreicherungen der Nanopartikel auf dem Schüttgut auf. Für die Herstellung verbesserter, an der Oberfläche funktionalisierter Partikel, ist aber eine gleichmäßige Nanopartikelbeladung durch das gesamte partikuläre Material hindurch wünschenswert.

Die erfindungsgemäße Vorrichtung ist eine Vorrichtung zur Abscheidung von Nanopartikeln aus einem nanopartikelbeladenen Trägergasstrom. Durch Ablagerung von Feststoffen oder Flüssigkeiten mit einer Größe kleiner als 1 µm aus einer Gasphase auf die Oberfläche eines größeren Partikels einer Schüttung werden zusätzlich durch die oberflächliche Nanopartikelablagerung funktionalisierte Partikel erhalten. Die Nanopartikel werden den Partikeln dabei in einer Gasphase suspendiert oder dispergiert zugeführt. Beispielsweise kann es sich um Flüssigkeitstropfen oder Feststoffpartikel handeln, welche im Gasstrom eine mittlere Größe von beispielsweise 50 nm aufweisen. Die Größe der Nanopartikel im Trägergas kann über Lichtstreuung bestimmt werden. Die Nanopartikel können dem Partikel weitere chemische Funktionalitäten oder Eigenschaften hinzufügen. So kann über die Ablagerung der weiteren nanopartikulären Substanz auf die Oberfläche der Partikel beispielsweise katalytische Eigenschaften bereitgestellt werden. Die Partikel können, alternativ oder zusätzlich, auch anti-mikrobiell oder mit weiteren chemisch aktiven Zentren oder generell mit weiteren nanopartikulär vorliegenden Substanzen, wie beispielsweise mit Nährstoffen, ausgerüstet werden. Durch die Möglichkeit zum Einsatz in einer Vielzahl unterschiedlicher Umsetzungen können sehr verschiedene Substanzen als abzuscheidende Nanopartikel eingesetzt werden. Mögliche Nanopartikel sind beispielsweise Metalle wie Nickel, Platin, Kupfer, Iridium, Palladium, Eisen, Cer, etc. oder halbleitende Materialien wie Silicium, Germanium, Indium-Zinn-Oxid (ITO) etc.. Die Nanopartikel können beispielsweise ligandenfrei mittels Funkenentladungsablation hergestellt werden. Die Nanopartikel können auch in einer flüssigen Phase dispergiert im Trägergasstrom vorliegen. Möglich sind beispielsweise lösliche Komplexverbindungen der oben genannten Metalle, wie Hexachloroplatinsäure oder deren Salze, Nickelnitrat und seine Hydrate, die chlor-, sulfat- oder nitrathaltigen Verbindungen der Metalle. Das Mengenverhältnis zwischen nanopartikulären Katalysatorvorläufer und Trägergas kann variabel innerhalb weiter Bereiche festgelegt werden. Beispielsweise kann die Beladung eines Liters an Trägergas unter Normbedingen mit 5 mg an nanopartikulären Katalysatorvorläufer erfolgen. Möglich sind Beladungen im Bereich von größer oder gleich 0,001 mg und kleiner oder gleich 1000 mg. Bevorzugt können mittels der erfindungsgemäßen Vorrichtungen hohe Beladungen an Trägergas verarbeitet werden. Als Trägergas können beispielsweise inerte Gase wie Stickstoff, die Edelgase oder aber auch Kohlendioxid eingesetzt werden.

Die Nanopartikel aus dem beladenen Trägergasstrom werden auf ein partikuläres Schüttgut abgeschieden. Der Nanopartikel wird aus dem Trägergas auf die Oberfläche eines Partikels abgeschieden, wobei mindestens ein Teil oder der ganze Nanopartikel auf der Partikeloberfläche verbleibt. Es ist auch möglich, dass der Nanopartikel zum Teil oder ganz in den Partikel eindiffundiert. Letzteres kann insbesondere dann der Fall sein, wenn flüssige Nanopartikel verwendet wird, welche beispielsweise auf poröse Partikel aufgebracht werden. Die Partikel stellen das mechanisch stabile Grundgerüst und die Oberfläche bereit, auf welcher die Nanopartikel abgeschieden werden. In der erfindungsgemäßen Vorrichtung wird der Partikel so ausgerüstet, dass ein weiter funktionalisierter Partikel entsteht. Dies wird durch die Ablagerung der Nanopartikel auf der Oberfläche und ggf. noch teilweise in einen inneren Bereich der Partikel erreicht. Die Partikel können eine regelmäßige, beispielsweise eine runde, ellipsoide, oder zylindrische Gestalt aufweisen. Es ist aber auch möglich, dass die Partikel unregelmäßig geformt sind. Die Partikel können eine einzige Größe oder eine Größenverteilung aufweisen. Bevorzugt können Partikel mit einer Größe oder anzahlgemittelten, mittleren Größe im Bereich von 1 µm bis zu 10 cm eingesetzt werden. Weiter bevorzugt kann die anzahlgemittelte, mittlere Partikelgröße von 1 µm bis zu 1 cm betragen. Es liegen also mehrere Zehnerpotenzen an Größenunterschied zwischen den abzuscheidenden Nanopartikeln und den partikulären Trägern vor. Als geeignete Partikel kommen beispielsweise Kohlenstoffpulver mit großer spezifischer Oberfläche, (Aktivkohle pulverförmig oder pelletiert), oxidische anorganische Materialien, wie z.B. Al₂O₃ in seinen unterschiedlichen Modifikationen (alpha, beta, gamma Al₂O₃), Siliciumdioxid, Ceroxid, Titandioxid, sowie Mischoxide wie Steatit, Bentonit, Montmorillonit in Frage. Die Partikel bilden in den Fällen ein Schüttgut, in denen eine Mehrzahl an Partikeln in einem Haufen vorliegen, wobei die Ortsbeziehungen der einzelnen Partikellagen im Haufen zueinander während der Abscheidung variabel ist. Die Partikel können sich prinzipiell unabhängig voneinander bewegen. Ohne mechanische Einwirkung von außen kann die Beweglichkeit der einzelnen Partikel im Wesentlichen durch die Form und die Wechselwirkung der einzelnen Partikel zueinander bestimmt sein.

Die Vorrichtung umfasst a) ein tubuläres Reaktorgehäuse aufweisend einen unteren Reaktorboden, einen oberen Reaktordeckel und eine den Reaktorboden mit dem Reaktordeckel verbindende Reaktorwand. Die Beladung einer Partikelschüttung mit einer Mehrzahl an einzelnen Partikeln erfolgt innerhalb eines Reaktors. Das innere Reaktorvolumen wird über ein Reaktorgehäuse definiert, welches durch einen Boden, einen Deckel und eine Reaktorwand begrenzt ist. Das Reaktorinnere weist die Form einer Röhre auf. Der Reaktorboden ist derjenige Teil des Reaktors, welcher üblicherweise den Boden des Aufstellortes kontaktiert oder diesem am nächsten ist. Der Reaktordeckel kann beispielsweise lösbar mit der Reaktorwand verbindbar ausgestaltet und an der Verbindungsstelle über eine Dichtung gasdicht verbunden sein. Es ist aber auch möglich, dass der Deckel fest und der Reaktorboden lösbar mit der Reaktorwand verbunden sind. Deckel, Reaktorboden und Umwälzvorrichtung können beispielsweise auch modular ausgestaltet sein, sodass einzelne Teile flexibel als Funktion der durchzuführenden Abscheidung in Ihren Größenrelationen und Funktionalitäten ausgewählt werden können. Das Reaktorgehäuse kann beispielsweise aus Glas, einem Kunststoff oder Metall gefertigt sein. Im Gehäuse können eine Heizung, eine Kühlung oder weitere Mittel oder Sensoren zur Konditionierung oder Überwachung des Reaktorinneren integriert sein. Die Höhe des Reaktors ergibt sich durch den Abstand von Reaktorboden zum tiefst liegenden Teil des Reaktordeckels. Die Breite des Reaktors ergibt sich als der Abstand zwischen den Innenwänden des Behälters. Im Falle eines variierenden Innendurchmessers ergibt sich dieser als volumengewichteter Mittelwert der unterschiedlichen Durchmesser. Bevorzugt kann ein Verhältnis aus der Höhe und Breite des Reaktors, berechnet nach Höhe des Reaktors dividiert durch die Breite des Reaktors, größer oder gleich 1 und kleiner oder gleich 20 betragen. Die Höhe steht als bevorzugt in einem bestimmten Verhältnis zur Breite, wobei das Verhältnis angibt, dass der Reaktor höher als breiter ist. Das Verhältnis kann weiter bevorzugt größer oder gleich 2 und kleiner oder gleich 17 und weiter bevorzugt größer oder gleich 5 und kleiner oder gleich 15 betragen. Innerhalb dieser Grenzen kann die Beladungseffizienz im Vergleich zu kürzeren Innenräumen erhöht sein. Insbesondere scheint die axiale Bewegungsrichtung der Partikel für eine Gleichmäßigkeit der Beschichtung vorteilhafter zu sein.

Die Vorrichtung umfasst b) eine innerhalb des Reaktorgehäuses angeordnete Umwälzvorrichtung, wobei die Umwälzvorrichtung eine rotierbare Welle und ein oder mehrere in unterschiedlichen axialen Höhen an der Welle angeordnete Mischblätter aufweist, wobei die Mischblätter dazu eingerichtet sind das partikuläre Schüttgut sowohl axial wie auch radial innerhalb des Reaktorgehäuses zu durchmischen. Zur gleichmäßigen und allseitig homogenen Beschichtung der Partikel ist innerhalb des Reaktorgehäuses eine Umwälzvorrichtung vorgesehen, welche die Partikel während der Kontaktierung mit dem Trägergas in rotatorische und/oder translatorische Bewegungen versetzt. Die Umwälzvorrichtung umfasst eine rotierbare Welle, welche sich axial durch das Reaktorgehäuse erstreckt. Die Welle ist im Gehäuse nicht starr angeordnet, sondern kann in eine oder in zwei Richtungen rotieren. Die Welle kann in der Grundform als ein Stab ausgeformt sein. Zur Erzeugung einer Partikelkonvektion innerhalb des Reaktorgehäuses weist die Umwälzvorrichtung an unterschiedlichen Höhenpositionen an der Welle Mischblätter auf. Es können ein, zwei, drei oder mehr Mischblätter an der Welle angeordnet sein. Die Mischblätter weisen dabei eine Geometrie auf, welche in der Lage ist, ein mit diesen Vorrichtungen bewegtes Schüttgut sowohl in einer Ebene, radial, als auch entlang der Welle, axial, innerhalb des Reaktorgehäuses zu bewegen. Der Transport der Partikel umfasst dabei während der Beladung sowohl eine translatorische wie auch rotatorische Bewegungskomponente. Dazu können die Mischblätter flächig, beispielsweise schaufelförmig, oder in einer 3-dimensionalen Form ausgestaltet sein. Beispiele für die Ausgestaltungen möglicher Mischblätter sind in den Figuren angegeben. An einer Höhenposition der Welle können eine oder mehrere, sich voneinander unabhängig bewegende Mischblätter angeordnet sein. Bevorzugt kann über die Anordnung der Mischblätter in der Schüttung eine Konvektion der Partikel erzeugt werden.

Die Vorrichtung umfasst c) mindestens einen Trägergaseinlass und mindestens einen Trägergasauslass, wobei der mit Nanopartikeln beladene Trägergasstrom durch den Trägergaseinlass in das Reaktorgehäuse hineingeleitet und der von Nanopartikeln entreicherte Trägergasstrom das Reaktorgehäuse durch den Trägergasauslass wieder verlässt. Das beladene Trägergas wird über den Einlass in den Reaktor gegeben, durch die Schüttung der Partikel geführt und verlässt von den Nanopartikeln entreichert den Reaktor durch den Trägergasauslass. Die Zuführung des Gases zum Einlass und der Einlass selbst kann aus Leitungen oder Rohren bestehen, welche die Wand des Reaktors durchbrechen und zum Gehäuse separate Einbauten bilden. Es ist auch möglich, dass das beladene Trägergas über die Welle in den Innenraum des Behälters gelangt. Das Trägergas kann beispielsweise durch Einblasen mit erhöhtem Druck in den Reaktor eingetragen werden. Das Trägergas kann an einer Stelle oder an verschiedenen Stellen durch die Gehäusewand in das Reaktorinnere und somit in die Schüttung der Katalysatorträger gelangen.

Der Trägergaseinlass ist im unteren Drittel des tubulären Reaktorgehäuses und der Trägergasauslass ist in der oberen Hälfte des tubulären Reaktorgehäuses angeordnet. Zur effizienten Beladung einer Partikelschüttung hat es sich als vorteilhaft herausgestellt, dass der Einlass des beladenen Gases im unteren Bereich des Reaktors erfolgt. Bevorzugt kann der Einlass in der unteren Hälfte des Reaktors und weiter bevorzugt in einem Bereich erfolgen, welcher zu kleiner oder gleich 25%, des Weiteren bevorzugt bis zu kleiner oder gleich 15% bezogen auf die Höhe H des Gehäuses im unteren Teil des Reaktors vom Reaktorboden entfernt ist. Die Definition der Begriffe unten und oben ergibt sich auf Basis der Strömungsrichtung des Trägergases. In Strömungsrichtung des Gases liegt der obere Teil des Reaktorgehäuses. Üblicherweise steht der untere Teil des Reaktorgehäuses in Kontakt mit dem Aufstellort des Reaktors.

In einer weiter bevorzugten Ausgestaltung der Vorrichtung kann die Umwälzvorrichtung auf einer axial verlaufenden Mittelachse des tubulären Reaktorgehäuses angeordnet sein. Die Mittelachse des Reaktorgehäuses ergibt sich für symmetrisch ausgestaltete Innenräume als Symmetrieachse des Gehäuses. Im Falle eines zylindrisch ausgestalteten Innenraumes verläuft die Mittelachse durch die Symmetrieachse des Zylinders, also durch einen Kreismittelpunkt der Grundfläche. Auf dieser Mittelachse, oder entlang dieser Mittelachse, verläuft die Welle der Umwälzvorrichtung, von welcher sich aus die Mischblätter axial erstrecken. Durch diese Symmetrie der Welle kann eine besonders günstige Konvektion der Schüttung während der Beladung erfolgen.

In einer bevorzugten Charakteristik der Vorrichtung kann zumindest ein Teil der Umwälzvorrichtung in axialer Richtung von einer zumindest abschnittsweise zylindrisch ausgeformten Ringdüse mit einem sich in Richtung des Reaktorbodens erstreckenden, unteren Ringdüsenabschluss und einem sich in Richtung des Reaktordeckels erstreckenden, oberen Ringdüsenabschluss umfasst werden, wobei die Ringdüse einen inneren, die Umwälzvorrichtung umfassenden Ringdüseninnenbereich und einen äußeren, zylindermantelförmigen Ringdüsenaußenbereich zwischen einer Ringdüsenaußenwand und einer Reaktorinnenwand im Reaktorgehäuse ausbildet und ein oder mehrere Ringdüsenschlitze aufweist. Die Kontaktierung der Partikel mit dem beladenen Trägergas kann sehr homogen und gesteuert über eine Ringdüse erfolgen, welche das Trägergas aus dem Trägergaseinlass gleichmäßig in die Schüttung leitet. Dazu kann die Ringdüse an der Innenwand des Reaktors angeordnet sein und mit ihrem Innenraum die Umwälzvorrichtung umfassen. In dieser Ausgestaltung ist das partikuläre Schüttgut um die Umwälzvorrichtung herum angeordnet und wird von dieser bewegt. Das bewegte Schüttgut wird dann von dem Innenrand des Reaktors her durch die Düse mit dem Trägergas beaufschlagt. Die Ringdüse muss dabei nicht die gesamte Umwälzvorrichtung in axialer Richtung umfassen. Es ist ausreichend, dass nur ein Teil der Umwälzvorrichtung von der Ringdüse direkt erfasst wird. Die Höhe der Ringdüse im Reaktorinneren kann beispielsweise die Hälfte der axialen Höhe der Umwälzvorrichtung, bevorzugt 1/3 der axialen Höhe der Umwälzvorrichtung betragen. Die Ringdüse wird über den Ringdüsenspalt zur Reaktorinnenwand aus dem Trägergaseinlass mit Trägergas versorgt und verteilt dieses durch die Düsenschlitze in den Ringdüseninnenbereich mit der Schüttung und Umwälzvorrichtung. Der untere Ringdüsenabschluss kann als Boden ausgestaltet sein, welcher parallel zum Reaktorboden verläuft und eine Durchführung für die Welle aufweist. Alternativ kann der untere Ringdüsenabschluss auch zylindrisch ausgestaltet sein und ohne Boden an den Zylinderwänden auf dem Reaktorboden aufsetzen und dort gegen diesen abdichten. Die Düsenschlitze leiten das Trägergas letztendlich in die Partikelschüttung. Es kann im Ringdüsenkörper ein Schlitz vorliegen. Es ist aber auch möglich, dass mehrere Düsenschlitze umlaufend zur Welle im Ringdüsenkörper angeordnet sind. Bevorzugt sind die Düsenschlitze in unteren Bereich der Ringdüse, nahe des unteren Ringdüsenabschlusses angeordnet.

In einer weiter bevorzugten Ausführungsform der Vorrichtung kann a) die Ringdüse im Bereich des oberen Ringdüsenabschlusses an der Ringdüsenaußenwand eine Vorrichtung zur Aufnahme eines Dichtmittels aufweisen, wobei das Dichtmittel dazu eingerichtet ist die Ringdüsenaußenwand gegenüber der Reaktorinnenwand gasdicht abzudichten;
b) die Ringdüse im Bereich des unteren Ringdüsenabschlusses den Reaktorboden kontaktieren und im Bereich des unteren Ringdüsenabschlusses ein oder mehrere Ringdüsenschlitze aufweisen, wobei die Ringdüsenschlitze dazu eingerichtet sind einen Durchtritt des beladenen Trägergasstromes durch die Ringdüse zu ermöglichen; und
c) die Ringdüse sich vollständig über den Trägergaseinlass erstreckt.

Zur sicheren und reproduzierbaren Zuführung des Trägergases durch die Schüttung ist der obere Abschluss der Ringdüse zur Aufnahme einer Dichtung vorbereitet, welche die Düse gegen die Reaktorinnenwand gasdicht ausführt. In dieser Ausführung wird eine gleichmäßige Versorgung des gesamten Ringdüseninnenbereiches mit Trägergas gewährleistet. Die Einleitung in die Schüttung im Innenbereich der Düse erfolgt über die im unteren Bereich der Düse vorliegenden Düsenöffnungen, welche einen Übertritt des Gases von dem Ringdüsenaußenin den Ringdüseninnenbereich erlauben. Die Düsen können beispielsweise umlaufend in der Ringdüse zentrisch um die Welle angeordnet sein und die gesamte Schüttung gleichmäßig mit Gas beaufschlagen. Der untere Teil der Ringdüse kann beispielsweise einen Boden aufweisen, welcher den Ringdüseninnenraum nach unten zum Reaktorboden hin abschließt. Es ist aber auch möglich, dass die Ringdüse keinen unteren Boden aufweist, sodass nur die Ringdüsenwände auf dem Reaktorboden aufliegen und einen Übertritt der Schüttung aus dem Ringdüseninnenraum in das übrige Reaktorvolumen verhindern. Falls ein Ringdüsenboden vorhanden ist, so kann dieser beispielsweise eine gasdichte Durchführung für die Welle aufweisen.

Im Ringdüseninneren bewegen sich die Mischblätter der Umwälzvorrichtung und sorgen so für eine Konvektion der Schüttung in radialer und axialer Richtung. Zur sicheren Weiterleitung des Trägergases ist es vorteilhaft, dass die Ringdüse in axialer Richtung zumindest den Trägergaseinlass überdeckt. In dieser Ausgestaltung wird das gesamte, durch den Trägergaseinlass strömende Gas über die Ringdüse in die Partikelschüttung geleitet, ohne dass ein Teilstrom ungenutzt in das Reaktorvolumen gelangt. Für die Zuführung des Trägergases kann es vorteilhaft sein, wenn das mit Nanopartikeln beladene Trägergas durch den Trägergaseinlass zuerst in einen spaltförmigen Ringdüsenaußenbereich und erst anschließend durch die Düsenöffnungen hindurch in den Ringdüseninnenbereich geführt wird. Diese Zuführung des Trägergases kann einen Druckpuffer im Außenbereich der Ringdüse erzeugen und die Zuführung des Gases in den Ringdüseninnenbereich unabhängig von den Schüttungseigenschaften vergleichmäßigen.

In einer weiter bevorzugten Ausführungsform der Vorrichtung kann der Trägergasstrom durch mehrere Trägergaseinlässe in das Reaktorgehäuse geführt werden, wobei die Trägergaseinlässe im unteren Drittel des Reaktorgehäuses und ringförmig in der Reaktorwand angeordnet sind, wobei die Trägergaseinlässe bezogen auf die Flächennormale der Reaktorinnenwand an dieser Stelle einen Winkel von größer oder gleich 5° und kleiner 90° in Richtung des Reaktorbodens einschließen. Das Trägergas kann auch ohne über eine Ringdüse geführt zu werden direkt durch den Reaktormantel in das Reaktorinnere gelangen. Dazu kann hat es sich als besonders geeignet herausgestellt, dass die Zuführung des Gases durch einen nach unten geneigtem Einlass, d.h. einen in Richtung Reaktorboden geneigten Einlass, erfolgt. In dieser Ausgestaltung wird ein Eintritt von Partikeln in den Trägergaseinlass verhindert. Zudem kann das Reaktorvolumen besser ausgenutzt werden, da der Anteil an durchströmbarer Schüttung erhöht wird. Die Flächenormale des Einlasses steht dabei senkrecht auf der Reaktorinnenwand an dieser Stelle und der Trägergaseinlass ist zu dieser Normalen nach unten hin geneigt. Im Falle eines runden Trägergaseinlasses wird die Winkelabweichung zwischen Flächennormalen und Mittelpunktvektor des Einlasses betrachtet. Zur Berechnung des unteren Drittels des Reaktorgehäuses wird das theoretisch, gesamte nutzbare Innenvolumen des Reaktors betrachtet.

In einer bevorzugten Ausführungsform der Vorrichtung kann im Reaktorgehäuse eine zylindrisch ausgeformte und zumindest einen Teil der Umwälzvorrichtung umfassende und sich in axialer Richtung in Richtung des Reaktordeckels erstreckende Transporthülse angeordnet sein, wobei die Transporthülse eine oder mehrere Auswurföffnungen aufweist, wobei die Auswurföffnungen dazu eingerichtet sind mit Nanopartikeln beladenes, partikuläres Schüttgut aus dem Innenvolumen der Transporthülse in Richtung Reaktorinnenwand zu befördern. Zur Erhöhung der weiteren Effizienz in der Zuführung des Trägergases in den Reaktor und durch die Partikelschüttung hat es sich als vorteilhaft herausgestellt, dass um die Umwälzvorrichtung mit den Mischblättern ein weiterer zylindrischer Mantel eingeführt wird, welcher das Reaktorinnenvolumen weiter aufteilt. Im Inneren dieser Transporthülse versetzt die Umwälzvorrichtung die Partikelschüttung in Bewegung. Die Partikel werden in radialer Richtung an einer Kontaktierung der Reaktorinnenwand gehindert und steigen in der Transporthülse in radialer Richtung bis zu den Auswurföffnungen der Hülse auf. Durch diese verlassen die Partikel den Innenbereich der Hülse und sinken an der Außenwand der Hülse in Richtung Reaktorboden wieder ab. Hier werden die Partikel durch die Umwälzvorrichtung wieder in die Hülse transportiert. Es ergibt sich also eine erzwungene Konvektion der Schüttung durch die Hülse. Bevorzugt können die Auswurföffnungen im oberen Bereich der Transporthülse in Richtung Reaktordeckel angebracht sein. Weiter bevorzugt können die Auswurföffnungen bezogen auf den Umfang der Transporthülse eine Ausdehnung von größer oder gleich 25% und kleiner oder gleich 80% einnehmen. Bevorzugt können die Auswurföffnungen radial auf dem Umfang der Transporthülse angeordnet sein. In diesen Fällen ergibt sich für eine Vielzahl an unterschiedlichen Partikelgeometrien eine verbesserte Konvektion und eine verbesserte Strömung und Ausnutzung des Trägergases. Weiter bevorzugt kann die Höhe der Transporthülse größer oder gleich 20% und kleiner oder gleich 80% bezogen auf die nutzbare Höhe des Reaktorinnenraumes betragen.

In einer weiterhin bevorzugten Charakteristik der Vorrichtung kann das höhenbezogene Verhältnis aus dem maximalen Außendurchmesser der Umwälzvorrichtung zu einem Innendurchmesser des Reaktorgehäuses, berechnet nach dem Außendurchmesser der Umwälzvorrichtung in dieser Höhe dividiert durch den Innendurchmesser des Reaktorgehäuses in dieser Höhe, größer oder gleich 0,4 und kleiner 1,0 betragen. Zur Sicherstellung einer ausreichenden Konvektion der Partikel und einer ausreichenden Strömungsfläche für das Trägergas hat sich oben angegebenes Verhältnis aus dem Durchmesser der Umwälzvorrichtung und dem durch den Reaktor bereitgestellten Innendurchmesser als besonders vorteilhaft herausgestellt. Höhere Verhältnisse können naturbeding nicht bereitgestellt werden und niedrigere Verhältnisse können die Beladungsleistung pro Zeiteinheit deutlich reduzieren. Bevorzugt kann das Verhältnis beim weiteren Vorliegen einer Ringdüse im Reaktor von größer oder gleich 0,5 und kleiner oder gleich 0,81 betragen. Im Falle einer Ausgestaltung mit Ringdüse und Transporthülse kann das Verhältnis größer oder gleich 0,7 und kleiner oder gleich 0,95 betragen. Im Falle einer Ausgestaltung mit Transporthülse und einer Begasung ohne Ringdüse durch den Reaktormantel haben sich Verhältnisse größer oder gleich 0,75 und kleiner oder gleich 0,98 als besonders geeignet erwiesen. Es lassen sich mit diesen Relationen aus Gasführung und Partikelkonvektion verbesserte Beladungen der Partikel erreichen. Dies ergibt sich zum einen in Bezug auf die Homogenität der Beladung als auch, zum anderen, in Bezug auf den erreichbaren Durchsatz an Partikeln und mit Nanopartikeln beladenem Trägergas.

In einer weiter bevorzugten Ausgestaltung der Vorrichtung kann der Trägergaseinlass kleiner oder gleich einem halben Reaktorinnendurchmesser vom Reaktorboden entfernt in der Reaktorwand angeordnet sein. Zur effizienten Ausnutzung des zur Verfügung stehenden Reaktorvolumens hat sich die Anordnung des Trägergaseinlasses in dem angegebenen Reaktorbereich als besonders effizient herausgestellt.

In einer bevorzugten Charakteristik der Vorrichtung kann ein sich zum Reaktorboden hin erstreckender Teil des untersten Mischblatts der Umwälzvorrichtung zum Reaktorboden hin einen Spalt ausbilden, wobei der Spalt eine Höhe von größer oder gleich 100 µm und kleiner oder gleich 1,5 mm aufweist. Zur schonenden und effizienten Konvektion der Partikel hat sich die oben angegebene Ausrichtung der Teile unter Ausbildung eines definierten Spaltes als besonders geeignet herausgestellt. Die Partikel werden effizient vor einer Zerstörung im Spalt geschützt und der Reaktorinnenraum wird möglichst effizient ausgenutzt. Für Beschichtungen von Schüttgütern mit einer Partikelgröße größer oder gleich 1 mm in mindestens einer der drei räumlichen Dimensionen kann die Höhe des Spaltes größer oder gleich 100 µm und kleiner oder gleich 10% der kleinsten Partikelabmessung in mindestens einer der drei räumlichen Dimensionen betragen.

In einer weiter bevorzugten Ausführungsform der Vorrichtung kann ein Abstand in axialer Richtung zwischen einer Transporthülseninnenwand und einem äußersten Durchmesser der Mischblätter der Transportvorrichtung größer oder gleich 100 µm und kleiner oder gleich 2 mm betragen. Zur Aufrechterhaltung einer möglichst schonenden Konvektion auch mechanisch eher fragiler Partikel hat sich oben angegebenes Verhältnis als besonders geeignet herausgestellt. Durch dieses Verhältnis ist eine effiziente Umwälzung unter homogener Beschichtung erreichbar. Gleichzeitig wird durch das angegebene Verhältnis aber auch sichergestellt, dass die Partikel als solche im sich ausbildenden Spalt nur geringen Scherkräften ausgesetzt sind. Die Partikelschüttung kann demzufolge in sehr kurzen Zeiträumen sehr gleichmäßig mit Nanopartikeln aus dem Trägergasstrom beladen werden.

Des Weiterhin erfindungsgemäß ist ein Verfahren zur Beladung eines partikulären Schüttguts mit Nanopartikeln aus einem Trägergasstrom, wobei das Verfahren mindestens die Verfahrensschritte umfasst:
i) Bereitstellen eines partikulären Schüttgutes in einer Vorrichtung nach einem der vorhergehenden Ansprüche;
ii) Leiten eines nanopartikelbeladenen Trägergasstrom durch den Trägergaseinlass in die Vorrichtung und durch das bewegte, partikuläre Schüttgut, wobei zumindest ein Teil der Nanopartikel aus dem Trägergasstrom auf der Oberfläche des partikulären Schüttguts abgeschieden wird;
iii) Entnehmen des mit Nanopartikeln beladenen Schüttgutes aus dem Reaktorgehäuse.

Die erfindungsgemäße Vorrichtung kann insbesondere zur Beschichtung eines partikulären Schüttgutes verwendet werden. Es lassen sich insbesondere sehr kleine und mechanische instabile Partikel sehr schnell und homogen mit Nanopartikeln versehen. Zudem können durch die effiziente Ausnutzung des Trägergases auch sehr teure Nanopartikel eingesetzt werden. Für die weitern Vorteile des erfindungsgemäßen Verfahrens wird explizit auf die für die Vorrichtung genannten Vorteile verwiesen.

Das Verfahren umfasst den Verfahrensschritt i), das Bereitstellen eines partikulären Schüttgutes in einer erfindungsgemäßen Vorrichtung. Das Bereitstellen des partikulären Schüttgutes kann batchweise oder kontinuierlich erfolgen. Für eine batchweise Bereitstellung wird das unbeladene Material in den geöffneten Reaktor eingefüllt und dieser anschließend verschlossen. In einer kontinuierlichen Beladung können die Partikel über einen eigenen Partikeleinlass in den Reaktor geladen. In diesem werden diese dann umgewälzt und beladen und können an einer Entnahmestelle aus dem Innenraum des Reaktors entnommen werden.

Das Verfahren umfasst den Verfahrensschritt ii), das Leiten eines nanopartikelbeladenen Trägergasstrom durch den Trägergaseinlass in die Vorrichtung und durch das bewegte, partikuläre Schüttgut, wobei zumindest ein Teil der Nanopartikel aus dem Trägergasstrom auf der Oberfläche des partikulären Schüttguts abgeschieden werden. Das Trägergas kann durch die weiter oben angegebenen Strömungswege, ohne oder mit Ringdüse und/oder Transporthülse kontinuierlich oder stoßweise durch die Partikelschüttung geführt werden. Für eine effiziente Beladung haben sich Gasdrücke von größer oder gleich 90 kPa (absolut) und kleiner oder gleich 150 kPa (absolut) als besonders effizient herausgestellt. Des Weiteren kann ein Gasfluss von größer oder gleich 0,5 l/min und kleiner oder gleich 5 l/min sowohl eine schnelle Beladung als auch eine möglichst geringe Störung der mechanischen Konvektion bewirken.

Das Verfahren umfasst den Verfahrensschritt iii), das Entnehmen des mit Nanopartikeln beladenen Schüttgutes aus dem Reaktorgehäuse. Das Entnehmen der beladenen Partikel kann ebenso wie die Beladung kontinuierlich oder diskontinuierlich erfolgen. Zur diskontinuierlichen Entnahme kann der Reaktor beispielsweise an einem Reaktordeckel geöffnet und die beladene Schüttung aus dem Reaktorinnenraum entfernt werden.

Zur schonenden Umwälzung kann die Drehzahl der Welle größer oder gleich 1 min⁻¹, und kleiner oder gleich 500 min⁻¹ betragen. Des Weiteren kann die Konzentration an Nanopartikeln im Trägergasstrom größer oder gleich 3 µg/L und kleiner odergleich 2 mg/L betragen. Der Massenstrom an Nanopartikeln kann größer oder gleich 0,5 mg/h und kleiner oder gleich 100 mg/h betragen. Diese Parameterbereiche können einzeln oder als Kombination einzelner Bereiche miteinander vorliegen.

In einer weiter bevorzugten Ausgestaltung des Verfahrens kann während der Beladung die Symmetrieachse der Umwälzvorrichtung so ausgerichtet sein, dass diese eine Abweichung von größer oder gleich 0° und kleiner oder gleich 20° in Bezug auf einen Vektor der Schwerebeschleunigung der Erde an dieser Stelle aufweist. Effiziente Beladungen können insbesondere in den Fällen schnell und homogen ausgeführt werden, in denen der Reaktor möglichst in einer senkrechten Position steht. Der Reaktorboden kontaktiert in diesem Fall den Aufstellort und die Gasführung erfolgt entgegen der Schwerebeschleunigung. Diese Konstellation kann im Vergleich zu einer deutlich geneigteren oder gar liegenden Reaktorachse eine deutlich gleichmäßigere Beschichtung von Partikelschüttungen erreichen.

Des Weiterhin erfindungsgemäß ist die Verwendung des erfindungsgemäßen Verfahrens zur Herstellung mit Nanopartikeln an der Oberfläche beladener Partikel. Über das erfindungsgemäße Verfahren unter Verwendung der erfindungsgemäßen Vorrichtung lassen sich auch schwer zu funktionalisierende Partikelschüttungen effizient und schnell mit Nanopartikeln beladen. Die Partikel können bevorzugt eine Größe im Bereich von 10 µm und 1 cm aufweisen. Bevorzugt können die Partikel eine eher runde Geometrie aufweisen. Weiterhin können die Partikel porös sein. Die Schüttung kann beispielsweise aus einem pelletierten Material, aus einem Granulat oder einem Extrudat bestehen. Als Extrudate haben sich eher längliche, "wurmförmige" Partikel mit einem Durchmesser von 1-3 mm und einer Länge zwischen 2-5 mm als geeignet herausgestellt.

In einer bevorzugten Charakteristik der Verwendung können die Nanopartikel aus der Gruppe bestehend aus Katalysatoren, Düngemitteln, Pflanzenschutzmitteln, Mikronährstoffen, antibakteriell ausgerüsteten Trägern, Sensorpartikeln, hitze- oder strahlungsschützenden Werkstoffen, Kosmetikprodukten, Medizinprodukten, Arzneimitteln, Batteriematerialien, Werkstoffen für die additive Fertigung ausgesucht sein. Es lassen sich über den Einsatz der Beschichtungsapparatur und im Rahmen der Durchführung des Verfahrens vielfältige unterschiedliche Beschichtungsaufgaben lösen, in den Partikel mit deutlich kleineren Nanopartikeln auf der Oberfläche weiter funktionalisiert werden. Insbesondere lassen sich über die erfindungsgemäße Herstellung Mikrofabriken zur Herstellung funktioneller Materialien erhalten. Es ist aber beispielsweise auch möglich, für Alkali-Batterien spezifische, weiter funktionalisierte Silizium-/Graphen-/Nanoröhren-Partikel bereitzustellen. Weitere Einsatzgebiete ergeben sich in der Bereitstellung von Katalysatoren generell und insbesondere für die pharmazeutische und elektrochemische Industrie. Ebenso vorteilhaft kann das erfindungsgemäße Verfahren im Bereich der Funktionalisierung von Separatoren oder generell Membranen für Batterien oder Brennstoffzellen sowie zur Herstellung von funktionalisierten Partikeln im Bereich der bildgebenden Diagnostik in der Medizin sein.

Die Katalysatoren können beispielsweise durch ein Abscheiden nanopartikulärer Katalysatorvorläufer auf die Schüttung gebildet werden. Die nanopartikulären Katalysatorvorläufer können als "Rauch" (Feststoff) oder als "Nebel" (Flüssigkeit) im Trägergas dispergiert vorliegen. Die nanopartikulären Katalysatorvorläufer oder generell die Nanopartikel können eine Ausdehnung von kleiner oder gleich 100 nm in mindestens einer der drei räumlichen Dimensionen aufweisen. Des Weiteren können die nanopartikulären Katalysatorvorläufer oder generell die Nanopartikel nicht als Moleküle vorliegen.

Beispiele und Ausführungsformen der vorliegenden Erfindung werden noch in exemplarischer Weise mit Bezug auf die Figuren 1 bis 8 beschrieben:
Figur 1 zeigt schematisch einen Aufbau einer erfindungsgemäßen Vorrichtung mit Ringdüse im Schnitt;
Figur 2 zeigt schematisch einen Aufbau einer erfindungsgemäßen Vorrichtung mit Ringdüse in einem Ausschnitt;
Figur 3 zeigt schematisch einen Aufbau einer erfindungsgemäßen Vorrichtung mit Ringdüse und Transporthülse im Schnitt;
Figur 4 zeigt schematisch einen Aufbau einer erfindungsgemäßen Vorrichtung mit Ringdüse und Transporthülse in einem Ausschnitt;
Figur 5 zeigt schematisch einen Aufbau einer erfindungsgemäßen Vorrichtung mit Trägergasstromeinlass in der Reaktorwand im Schnitt;
Figur 6 zeigt schematisch einen weiteren Aufbau einer erfindungsgemäßen Vorrichtung mit Trägergasstromeinlass im Reaktormantel in einem Ausschnitt;
Figur 7 zeigt schematisch einen möglichen Aufbau einer Ringdüse in einer Seitenansicht;
Figur 8 zeigt schematisch einen möglichen Aufbau einer Ringdüse in einer isometrischen Ansicht von oben.

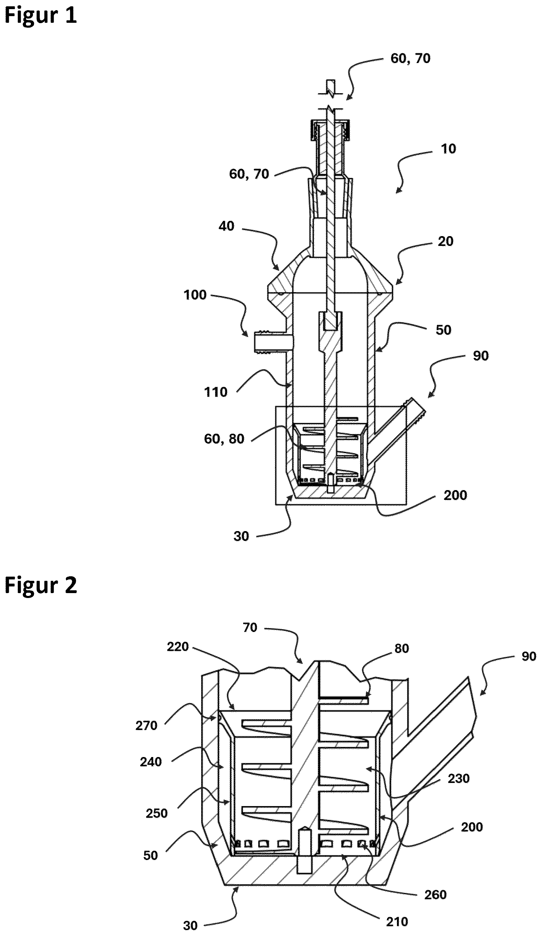

Die Figur 1 zeigt schematisch einen Aufbau einer erfindungsgemäßen Vorrichtung 10 mit einer Ringdüse 200 im Schnitt. Die Vorrichtung 10 ist zur Abscheidung von Nanopartikeln aus einem nanopartikelbeladenen Trägergasstrom auf ein partikuläres Schüttgut geeignet, wobei das Schüttgut partikulär innerhalb des Reaktors 20 vorliegt. Geeignete Schüttgüter können beispielsweise eine anzahlgemittelte Partikelgröße von kleiner oder gleich 250 µm aufweisen. Die Vorrichtung 10 kann beispielsweise aus Metall, Glas oder Kunststoff gefertigt sein und umfasst mehrere funktionale Bestandteile. Als äußere Begrenzung des Beladungsvolumens umfasst die Vorrichtung 10 ein tubuläres Reaktorgehäuse 20. Das Reaktorgehäuse 20 wird durch einen unteren Reaktorboden 30 zum Aufstellort nach unten abgegrenzt. Nach oben hin bildet ein oberer Reaktordeckel 40 den Abschluss, wobei der Reaktorboden 30 mit dem Reaktordeckel 40 über die Reaktorwand 50 miteinander verbunden sind. Reaktorboden 30, Reaktordeckel 40 und Reaktorwand 50 können einstückig ausgebildet sein. Es ist aber auch möglich, dass das Reaktorgehäuse 20 aus mehreren, voneinander separierbaren Teilen zusammengesetzt ist. Neben dem Reaktorgehäuse 20 weist die Vorrichtung im Inneren des Reaktorgehäuses 20 eine Umwälzvorrichtung 60 auf. Die Umwälzvorrichtung 60 kann ebenfalls einstückig oder modular, beispielsweise mehrteilig aufgebaut sein. Die Umwälzvorrichtung 60 weist zumindest die Funktion einer rotierbare Welle 70 und ein oder mehrere in unterschiedlichen axialen Höhen an der Welle 70 angeordnete Mischblätter 80 auf. Die Mischblätter 80 sind dazu eingerichtet; dass partikuläre Schüttgut sowohl axial wie auch radial innerhalb des Reaktorgehäuses 20 zu durchmischen. Die Mischblätter 80 sind in dieser und den nächsten Figuren in Form einer Helix bzw. eines vertikalen Schneckenförderers mit einer Steigung von 10 - 25 mm ausgestaltet. Die Mischblätter 80 können aber auch eine einfache Paddelform oder aber komplexere Geometrien zur Bewegung der Partikel in axialer und vertikaler Richtung aufweisen. Die Welle 70 ist für den Eintrag der mechanischen Energie verantwortlich, wobei die eigentliche Kontaktierung und Bewegung der Schüttung über die Mischblätter 80 erfolgt. Die Mischblätter 80 induzieren in der Schüttung eine Konvektion und sorgen für eine Lageveränderung der Partikel. Dadurch lässt sich eine gleichmäßige Beschichtung erreichen. Die Nanopartikel werden in einem Trägergasstrom zugeführt, welcher Nanopartikel in Form von Feststoffen oder Flüssigkeitstropfen bereitstellt. Dieser Trägergasstrom gelangt durch einen Trägergaseinlass 90 in das Reaktorgehäuse 20 und verlässt dieses, durch Abscheidung auf die Partikel von den Nanopartikeln entreichert, durch mindestens einen Trägergasauslass 100. Zur Beladung der Schüttung ist ein Trägergaseinlass 90 und ein Trägergasauslass 100 ausreichend, es können aber auch mehrere Trägergaseinlässe 90 und -Auslässe 100 im Reaktorgehäuse 20 angeordnet sein. Zur gleichmäßigen Versorgung der Schüttung ist der Trägergaseinlass 90 im unteren Drittel des tubulären Reaktorgehäuses 20 und der Trägergasauslass 100 in der oberen Hälfte des tubulären Reaktorgehäuses 20 angeordnet. Die Ortsangaben zur Positionierung der Gasführung beziehen sich auf das nominell nutzbare Innenvolumen des Reaktorgehäuses 20. In dieser Figur ist zudem der Einsatz einer Ringdüse 200 gezeigt, welche in das Reaktorgehäuse 20 eingeschoben ist. Die Schüttung befindet sich in der Ringdüse 200 und wird in dieser Ringdüse mit den Nanopartikeln beladen. Dies Höhe der Partikelschüttung kann sich zweckmäßigerweise an der Höhe der Ringdüse 200 in axialer Richtung orientieren.

Die Figur 2 zeigt schematisch einen Aufbau einer erfindungsgemäßen Vorrichtung 10 mit Ringdüse 200 in einem Ausschnitt. Diese Figur zeigt den unteren Abschnitt der Figur 1 in einer Vergrößerung. In der Figur ist der untere Reaktorboden 30 zu sehen, auf den die Umwälzvorrichtung 60 mit der Welle 70 steht. Vom unteren Reaktorboden 30 erstreckt sich die Reaktorwand, welche im oberen Teil der Vorrichtung 10 den oberen Reaktordeckel 40 (nicht dargestellt) kontaktiert. Im Reaktorgehäuse 20 ist eine Ringdüse 200 angeordnet, welche den Trägergasstrom in die Schüttung verteilt. Die Führung des beladenen Trägergases erfolgt durch den Trägergaseinlass 90. Dieser Trägergaseinlass 90 wird durch die Ringdüse 200 überdeckt. Das Trägergas strömt in den Ringdüsenaußenbereich 240 und kontaktiert hier die Ringdüsenaußenwand 250. Dieser Bereich wird nach oben hin, im Bereich des oberen Ringdüsenabschlusses 220, durch eine Dichtmittelaufnahme 270 und in dieser befindliches Dichtmittel abgeschlossen. Das Trägergas gelangt aus dem Ringdüsenaußenbereich 240 durch die Ringdüsenschlitze 260 in den Ringdüseninnenbereich 230. In diesem Bereich wird die Schüttung durch die Umwälzvorrichtung 60 bewegt. Die Umwälzvorrichtung 60 mit den Mischblättern 80 bewegt sich innerhalb des Ringdüseninnenbereiches 230. In diesem wird die Schüttung in radialer und axialer Richtung bezogen auf die Vorrichtungsachse bewegt und umgewälzt. Durch die Bewegung der Schüttung kann eine gleichmäßige Kontaktierung der Partikel mit dem Trägergas gewährleistet werden. Das von den Nanopartikeln entreicherte Trägergas verlässt die Ringdüse im oberen Ringdüsenabschluss 220 die Ringdüse und kann durch den Trägergasauslass 100 das Reaktorgehäuse 20 verlassen. Durch das Einleiten des Trägergases in den Ringdüsenaußenbereich 240 können Druckspitzen abgepuffert und eine gleichmäßigere Versorgung mit Trägergas erreicht werden.

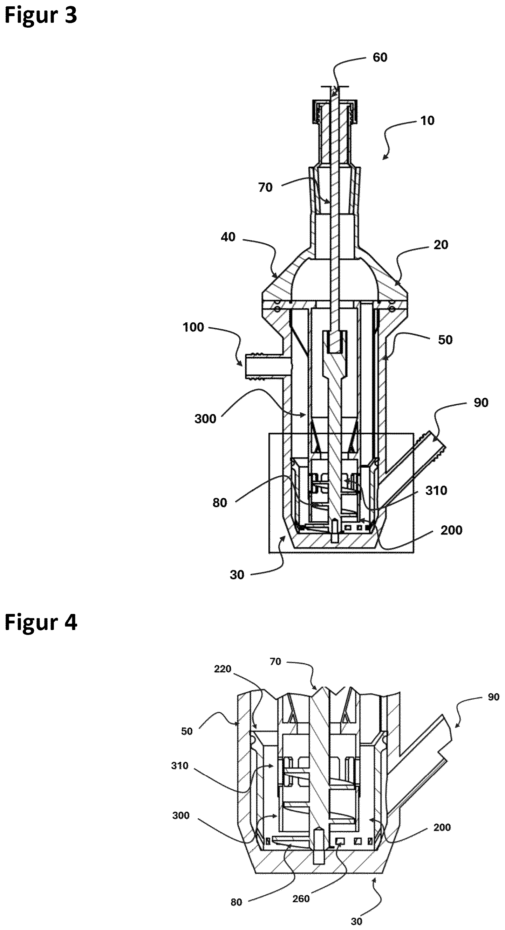

Die Figur 3 zeigt schematisch einen Aufbau einer erfindungsgemäßen Vorrichtung 10 mit Ringdüse 200 und Transporthülse 300 im Schnitt. Der grundlegende Aufbau der Vorrichtung 10 entspricht dem Aufbau, welcher für die Figur 1 beschrieben ist. Als zusätzliches Aufbauelement ist in dieser Figur eine Transporthülse 300 dargestellt. Die Transporthülse 300 erstreckt sich in axialer Richtung durch das Reaktorgehäuse 20. Die Transporthülse 300 kann beispielsweise im Bereich des oberen Reaktordeckels 40 am Reaktorgehäuse 20 angeordnet sein. Ein Teilbereich der Transporthülse 300 erstreckt sich in den Ringdüseninnenbereich 230 und bildet zur Ringdüse 200 einen Spalt aus. Die Schüttung wird in der Transporthülse 300 durch die Umwälzvorrichtung 60 bewegt. Die Schüttung steigt in diesem Bereich in der Transporthülse 300 auf und verlässt die Transporthülse 300 durch die Auswurföffnungen 310. Das durch die Auswurföffnungen 310 der Transporthülse 300 transportierte Material gelangt in den Spalt zwischen Transporthülse 300 und Ringdüse 200 und wird durch die Umwälzvorrichtung 60 wieder in axialer Richtung befördert. Dieser Vorgang wird so lange wiederholt, bis eine gleichmäßige Beladung der Partikel erreicht ist.

Figur 4 zeigt schematisch einen Aufbau einer erfindungsgemäßen Vorrichtung mit Ringdüse und Transporthülse in einem Ausschnitt. In dieser Figur ist der untere Bereich der Vorrichtung 10 in einer Ausführungsform mit Ringdüse 200 und Transporthülse in einer Vergrößerung gezeigt. Das Trägergas gelangt durch den Trägergaseinlass 90 in das Reaktorgehäuse 20 und wird durch die Ringdüse 200 gleichmäßig in die Schüttung verteilt. Die Schüttung wird durch die Umwälzvorrichtung 60 bewegt, wobei die Schüttung in der Transporthülse 300 aufsteigt. Das Material verlässt die Transporthülse 300 durch die Auswurföffnungen 310 und gelangt auf dem Boden der Ringdüse 200. Hier wird das Material wieder von den Mischblättern 80 der Umwälzvorrichtung 60 erfasst und innerhalb der Transporthülse in Richtung oberer Reaktordeckel 40 transportiert. Dieser Vorgang erfolgt so lange, bis eine homogene und gleichmäßige Beladung der bewegten Partikel erreicht ist. Durch diese Konstruktion kann das Material mechanische sehr schonend bewegt und effizient beladen werden.

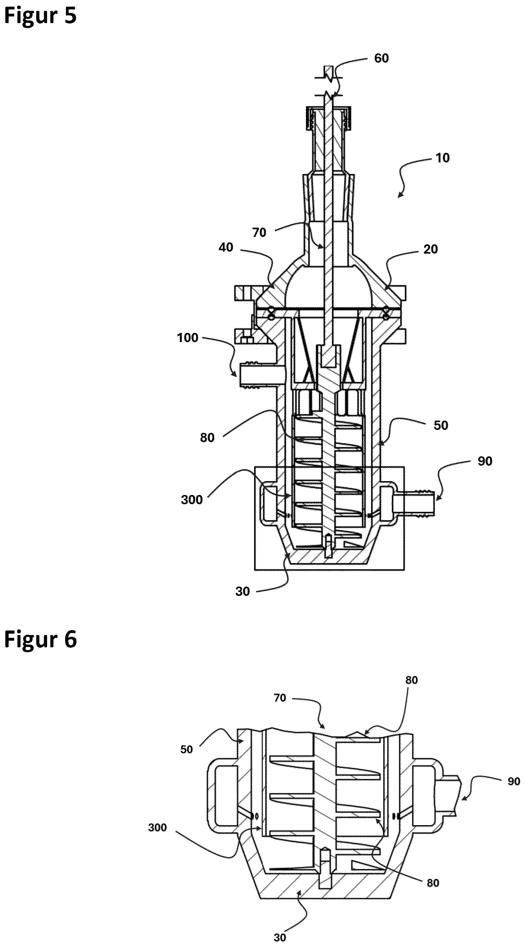

Die Figur 5 zeigt schematisch zeigt schematisch einen Aufbau einer erfindungsgemäßen Vorrichtung 10 mit einem Trägergasstromeinlass 90 in der Reaktorwand 50 im Schnitt. In einer Alternative zur Zuführung des Trägergasstromes durch eine Ringdüse 200 lässt sich das Trägergas auch durch das Reaktorgehäuse 20 und hier durch die Reaktorwand 50 in das Reaktorgehäuse 20 leiten. Dies Zuführung kann durch einen Trägergaseinlass 90 erfolgen, welcher symmetrisch um das Reaktorgehäuse 20 geführt wird. Die Einleitung des Trägergases in das Innere des Reaktorgehäuses 20 kann durch ein oder mehrere Leitungen oder Bohrungen erfolgen, welche die Reaktorwand 60 durchbrechen und ein Einströmen des Trägergases erlauben. In dieser Figur ist ebenfalls eine Partikelschüttungsführung mittels einer Transporthülse 300 dargestellt. Das beladene Trägergas gelang in den Spalt zwischen Transporthülse 300 und Reaktorinnenwand 110. Hier durchströmt es die Schüttung und wird ebenfalls durch die Transporthülse 300 über die Umwälzvorrichtung 60 mit der Schüttung durch die Transporthülse 300 befördert. Die Nanopartikel aus dem Trägergas werden dadurch auf die Oberfläche der sich bewegenden Partikel abgeschieden.

Die Figur 6 zeigt schematisch einen weiteren Aufbau einer erfindungsgemäßen Vorrichtung mit Trägergasstromeinlass im Reaktormantel in einem Ausschnitt. In dieser Figur ist die Zuführung des Trägergases durch das Reaktorgehäuse 20 ohne Ringdüse in einer Vergrößerung dargestellt. Es sind dieselben Aufbauten wie in der Figur 5 beschrieben dargestellt. In dieser Figur ist zudem dargestellt, dass die Düsen zur Einleitung des Trägergases in Richtung des unteren Reaktorbodens geneigt sind. Diese Ausrichtung kann verhindern, dass Partikel die Zuführung des Trägergases während der Umwälzung substanziell blockieren.

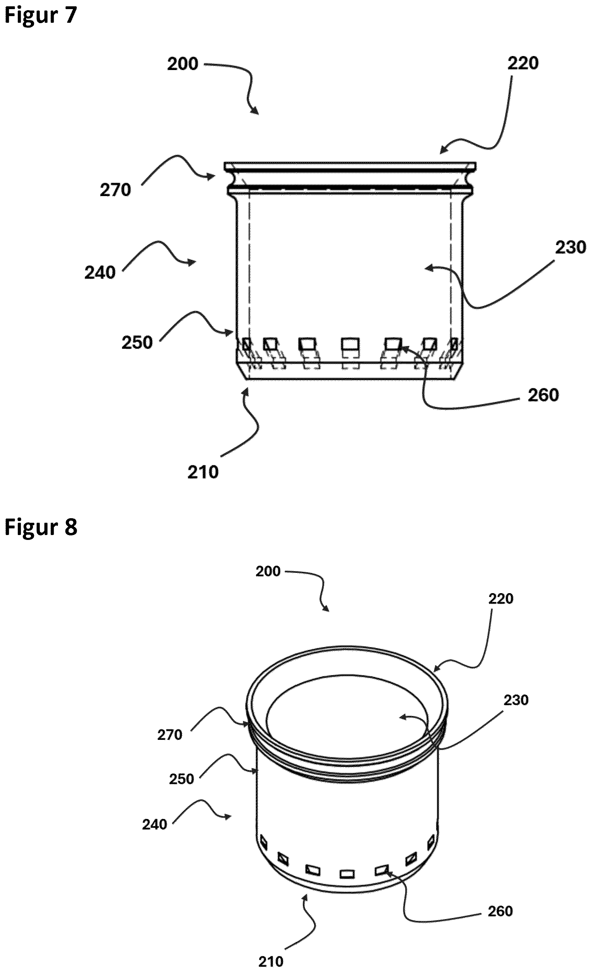

Die Figur 7 zeigt schematisch einen möglichen Aufbau einer Ringdüse 200 in einer Seitenansicht. Die Ringdüse 200 kann als austausch- oder adaptierbare Komponente ausgestaltet und auf die jeweilige Beladungsaufgabe angepasst sein. Die Figur zeigt die Ringdüse 200, welche durch einen unteren Ringdüsenabschluss 210 und einen oberen Ringdüsenabschluss 220 begrenzt ist. In diesem Fall ist die Ringdüse 200 zylindrisch ausgeführt, wobei sich ein ebenfalls zylindrischer Ringdüseninnenbereich 230 ergibt. In diesem Bereich bewegt sich auch die Umwälzvorrichtung 60 mit den Mischblättern 80 und wälzt die zu beladenden Partikel mechanisch um. Zum Ringdüsenaußenbereich 240 wird die Ringdüse 200 durch die Ringdüsenaußenwand 250 abgegrenzt. Das Trägergas wird durch die eigentlichen Ringdüsenschlitze 260 in den Ringdüseninnenbereich 230 mit den zu beladenden Partikeln geleitet. Zur effizienten Führung des Trägergases kann die Ringdüse 200 im oberen Ringdüsenabschluss 220 eine Dichtmittelaufnahme 270 aufweisen. In dieser kann beispielsweise ein O-Ring platziert werden, welcher die Ringdüse 200 gegenüber der Reaktorinnenwand 110 gasdicht abdichtet.

Die Figur 8 zeigt schematisch einen möglichen Aufbau einer Ringdüse in einer isometrischen Ansicht. In dieser Figur sind die für die Figur 7 beschriebenen Merkmale der Ringdüse 200 perspektivisch dargestellt.

### Beispiele

Herstellung von Nanopartikel mittels Funkenentladungsablation zur Beschichtung einer partikulären Aluminiumoxid-Schüttung mittels eines Trägergasstromes

Es wird ein Nanopartikelgemisch mittels Funkenentladungsablation hergestellt. Dazu werden Elektroden mit einer massenbezogenen Zusammensetzung von 5 % Platin und 95 % Nickel benutzt. Die Parameter der Funkenentladungsablation betragen 10 mA und 1,3 kV. Es ergibt sich daraus eine Entladungs-Frequenz von ca. 150 - 200 Hz. Über die Funkenendladung wird ein Nanopartikel-Massenstrom am Gaseintritt der erfindungsgemäßen Beschichtungsapparatur von ca. 1,5 mg/h erhalten. Der Massenstrom an Nickel-Platin-Nanopartikeln wird gravimetrisch durch Abscheidung auf eine Membran bestimmt. Unter Verwendung eines Argon-Trägergasstromes mit einem Volumenstrom von ca. 3 Nl/min bei einem Betriebsdruck von 0,5 kPa bis 20 kPa (d.h. bei Normbedingungen: 101,8 kPa - 121,3 kPa absolut) ergibt sich eine Beladung des Trägergasstromes mit Nanopartikeln in der Größenordnung von 8,3 µg/L. Die resultierende Nanopartikel-Größe am Eintritt der Beschichtungsapparatur ist kleiner als 10 nm. Als partikuläre Schüttung werden 30 g Al₂O₃-Pulver verwendet. Die Größe der Aluminiumoxid-Partikel beträgt ca. 32 - 63 µm. Die Partikel können vor dem Einsatz zur Entfernung möglicherweise vorhandener OH-Gruppen bei 500 °C calciniert werden.

Die Beladung der partikulären Schüttung kann beispielsweise in einer Apparatur wie in der Figur 3 und 4 gezeigt stattfinden. Das Reaktorgehäuse besteht aus Glas, die Welle aus Edelstahl, geführt durch einen kommerziell erhältlichen Rührverschluss mit Normschliff. Die Einbauten (Transporthülse, Umwälzvorrichtung und Ringdüse) sind 3d-gedruckte Bauteile aus einem ESD-sicherem PLA-Kunststoff. Die Apparatur weist einen Innendurchmesser von 62,5 mm auf, der Innendurchmesser verjüngt sich ab 13 mm oberhalb des Bodens kegelförmig bis zum Boden auf 49,5 mm. Es ist eine Schneckenwelle mit den folgenden Spezifikationen eingebaut: Die Steigung je Windung beträgt 15 mm, der Außendurchmesser 31 mm und erhöht sich auf der untersten Windung bis auf 47 mm, die Gesamthöhe der Windungen beträgt 42 mm, Durchmesser der Welle 10 mm. Der Spalt zwischen der untersten Windung und dem Reaktorboden weist eine Höhe von 1,0 mm auf. Der Innendurchmesser der Transporthülse beträgt 32 mm mit einer Wandstärke von 1,4 mm unterhalb der Auswurföffnungen. Zwischen dem Außendurchmesser der Umwälzvorrichtung und dem Innendurchmesser der Transporthülse ergibt sich ein Abstand von 0,5 mm.

Die Welle dreht sich mit einer Frequenz von ca. 3 Hz. Die Füllhöhe der Partikelschüttung beträgt ca. 3/4 des Abstands zwischen dem Reaktorboden und der Unterkante der Auswurföffnungen, das entspricht ca. 1/8 der Gesamthöhe der Apparatur. Die Mittelachse des Trägergasauslasses befindet sich 115,5 mm vom Boden der Apparatur entfernt. Die Mittelachse des Trägergaseinlasses weist eine Neigung von 45° auf und durchstößt die innere Reaktorwand 24,5 mm oberhalb des Reaktorbodens. Die Ringdüse erstreckt sich vom unteren Reaktorboden bis zu einer Höhe von 52 mm in die Apparatur. Die Ringdüse hat einen Innendurchmesser von 48 mm und weist 12 umlaufende Düsenspalte mit einer Neigung von 60° auf. Die Fläche der Düsenspalte beträgt in Summe ca. 150 mm² Zwischen der Transporthülse und der Ringdüse wird ein Ringspalt von 6,6 mm gebildet.

Das höhenbezogene Verhältnis aus dem Außendurchmesser der Umwälzvorrichtung und dem Innendurchmesser des Reaktorgehäuses beträgt in diesem Ausführungsbeispiel 0,495 bis 0,95.

Die Apparatur kann beispielsweise gegenüber der Atmosphäre offen ausgestaltet sein. Es kann sich dabei der oben genannte Gegendruck einstellen. Der erhaltene Gegendruck ist eine Funktion des Trägergas-Volumenstromes, der Menge an zu beschichtendem Material, der Einbau oder das Fehlen einer Ringdüse oder Ähnliches. So kann beispielsweise am Trägergasauslass ein Filter eingebaut sein. Die Temperatur während des Beschichtungsvorgangs kann beispielsweise zwischen 15°C-25°C, beispielsweise Raumtemperatur, betragen.

Es werden durch die Beschichtung mit Ni/Pt-Nanopartikeln homogen beladene Aluminiumoxidpartikel erhalten. Die Partikelgröße nach Beladung unterscheidet sich nicht signifikant von der Partikelgröße der unbeschichteten Schüttung, welches für eine geringe mechanische Belastung während der Beladung spricht.

Prinzipiell können vielfältige aus einer Funkenentladungsablation stammende Nanopartikel eingesetzt werden. In der Funkenentladungsablation können Elektroden aus den leitenden und halbleitenden Metallen des Periodensystems als Reinstoffe, Legierungen oder gesinterte Elektroden verwendet werden. Jede Elektrode des Elektrodenpaars kann dabei auch aus unterschiedlichen Materialien bestehen. Für die Beschichtung mit unterschiedlichen Metallen kann auch eine zeitlich sequentielle Beschichtung erfolgen oder parallel mehrere Funkenentladungsablations-Apparaturen mit anderen Elektrodenmaterialien eingesetzt werden, deren mit Nanopartikeln beladene Trägergasströme vor dem Eintritt in die Beschichtungsapparatur zusammengeführt werden oder über unterschiedliche Trägergaseinlässe zugeführt werden.

Herstellung von Nanopartikel mittels Spray-Pyrolyse zur Beschichtung einer partikulären Aluminiumoxid-Schüttung aus einem Trägergasstrom

Zur Beschichtung können auch aus einer Spray-Pyrolyse erhaltene Nanopartikel verwendet werden. Die Beschichtung kann mit einer Apparatur nach der Figur 5 und 6 durchgeführt werden. Die Apparatur weist einen Innendurchmesser von 62,5 mm auf, der Innendurchmesser verjüngt sich ab 13 mm oberhalb des Bodens kegelförmig bis zum Boden auf 49,5mm. Die verwendeten Materialien sind die gleichen wie zuvor beschrieben. Es ist eine vertikale Schneckenwelle mit den folgenden Spezifikationen eingebaut: Die Steigung je Windung beträgt 15 mm, der Außendurchmesser 44,5 mm und erhöht sich auf der untersten Windung bis auf 49 mm, die Gesamthöhe der Windungen beträgt 90 mm, der Durchmesser der Welle 10 mm. Der Spalt zwischen der untersten Windung und dem Reaktorboden weist eine Höhe von 1,5 mm auf. An der untersten Windung befindet sich ein zusätzliches Mischpaddel, das bis in den von Transporthülse und Reaktorinnenwand gebildeten Ringspalt hineinragt. Die Welle dreht sich mit einer Frequenz von 3,5 Hz. Die Füllhöhe der Partikelschüttung beträgt ca. ¼ der Gesamthöhe der Apparatur. Die Mittelachse des Trägergaseinlasses befindet sich 31,4 mm vom Boden der Apparatur entfernt. Durch die Reaktorinnenwand stoßen 32 symmetrisch angeordnete Bohrungen mit einer Neigung von 30°. Die Gesamtfläche der Bohrungen beträgt in Summe ca. 200 mm² Zwischen der Transporthülse und der Innenwand des Reaktorgehäuses wird ein Ringspalt von 5 mm gebildet.

Das höhenbezogene Verhältnis aus dem Außendurchmesser der Umwälzvorrichtung und dem Innendurchmesser des Reaktorgehäuses beträgt in diesem Ausführungsbeispiel 0,712 bis 0,990.

Es wird ein Nanopartikelgemisch mittels Spray-Pyrolyse hergestellt. Dazu werden Precursor-lösungen mit einer massenbezogenen Zusammensetzung aus 1 % Platin und 99 % Nickel hergestellt. Der Nanopartikel-Massenstrom am Eintritt der Beschichtungsapparatur beträgt ca. 50 mg/h. Der Massenstrom wurde im Vorfeld gravimetrisch durch Abscheidung auf eine Membran bestimmt. Durch dieses Verfahren ergibt sich eine typische Nanopartikelgröße von < 20 nm. Unter Verwendung eines Stickstoff-Trägergasstromes mit einem Volumenstrom von ca. 2 Nl/min (vorteilhaft ist ein Volumenstrom von 1-5 Nl/min) bei einem Betriebsdruck von 0,5 kPa bis 50 kPa (d.h. bei Normbedingungen ca. 101 kPa - 151 kPa absolut) ergibt sich eine Beladung des Trägergasstromes mit Nanopartikeln in der Größenordnung von 417 µg/L. Als partikuläre Schüttung werden 80 g Al₂O₃-Pulver verwendet. Die Größe der Aluminiumoxid-Partikel beträgt ca. 32 - 63 µm. Die Partikel der Schüttung können vor dem Einsatz zur Entfernung möglicherweise vorhandener OH-Gruppen bei 500 °C calciniert werden.

Es werden durch die Beschichtung mit Ni/Pt-Nanopartikeln homogen beladene Aluminiumoxidpartikel erhalten. Die Partikelgröße nach Beladung unterscheidet sich nicht signifikant von der Partikelgröße der unbeschichteten Schüttung, welches für eine geringe mechanische Belastung während der Beladung spricht.

Bei der Spray-Pyrolysis können zur Herstellung der Nanopartikel-Gemische verschiedene Precursor-Lösungen eingesetzt werden. Es ist auch ein zeitlich sequentieller Betrieb mit unterschiedlichen Precursor-Lösungen möglich. Es können vielfältige Substanzen zu nanopartikulären Feststoffen verarbeitet werden, für die Precursor-Lösungen existieren.

Es ist auch eine Kombination der unterschiedlicher Verfahren zur Herstellung der Nanopartikel möglich. Diese unterschiedlich erzeugten Nanopartikel können vor Eintritt in einen Trägergaseinlass zusammengeführt werden oder über unterschiedliche Trägergaseinlässe der Beschichtungsapparatur zugeführt werden.

### Bezugszeichenliste

- 10: Vorrichtung
- 20: Reaktorgehäuse
- 30: unterer Reaktorboden
- 40: oberer Reaktordeckel
- 50: Reaktorwand
- 60: Umwälzvorrichtung
- 70: rotierbare Welle
- 80: Mischblätter
- 90: Trägergaseinlass
- 100: Trägergasauslass
- 110: Reaktorinnenwand
- 200: Ringdüse
- 210: unterer Ringdüsenabschluss
- 220: oberer Ringdüsenabschluss
- 230: Ringdüseninnenbereich
- 240: Ringdüsenaußenbereich
- 250: Ringdüsenaußenwand
- 260: Ringdüsenschlitze
- 270: Vorrichtung zur Aufnahme eines Dichtmittels
- 300: Transporthülse
- 310: Auswurföffnungen

## Patentansprüche

1. Vorrichtung (10) zur Abscheidung von Nanopartikeln aus einem nanopartikelbeladenen Trägergasstrom auf ein partikuläres Schüttgut, **dadurch gekennzeichnet, dass** die Vorrichtung (10) mindestens umfasst:
a) ein tubuläres Reaktorgehäuse (20) aufweisend einen unteren Reaktorboden (30), einen oberen Reaktordeckel (40) und eine den Reaktorboden (30) mit dem Reaktordeckel (40) verbindende Reaktorwand (50);
b) eine innerhalb des Reaktorgehäuses (20) angeordnete Umwälzvorrichtung (60), wobei die Umwälzvorrichtung (60) eine rotierbare Welle (70) und ein oder mehrere in unterschiedlichen axialen Höhen an der Welle (70) angeordnete Mischblätter (80) aufweist, wobei die Mischblätter (80) dazu eingerichtet sind das partikuläre Schüttgut sowohl axial wie auch radial innerhalb des Reaktorgehäuses (20) zu durchmischen;
c) mindestens einen Trägergaseinlass (90) und mindestens einen Trägergasauslass (100), wobei der mit Nanopartikeln beladene Trägergasstrom durch den Trägergaseinlass (90) in das Reaktorgehäuse (20) hineingeleitet und der von Nanopartikeln entreicherte Trägergasstrom das Reaktorgehäuse (20) durch den Trägergasauslass (100) wieder verlässt, wobei der Trägergaseinlass (90) im unteren Drittel des tubulären Reaktorgehäuses (20) und der Trägergasauslass (100) in der oberen Hälfte des tubulären Reaktorgehäuses (20) angeordnet ist.

2. Vorrichtung nach Anspruch 1, wobei die Umwälzvorrichtung (60) auf einer axial verlaufenden Mittelachse des tubulären Reaktorgehäuses (20) angeordnet ist.

3. Vorrichtung nach einem der vorhergehenden Ansprüche, wobei zumindest ein Teil der Umwälzvorrichtung (60) in axialer Richtung von einer zumindest abschnittsweise zylindrisch ausgeformten Ringdüse (200) mit einem sich in Richtung des Reaktorbodens (30) erstreckenden, unteren Ringdüsenabschluss (210) und einem sich in Richtung des Reaktordeckels (40) erstreckenden, oberen Ringdüsenabschluss (220) umfasst wird, wobei die Ringdüse (200) einen inneren, die Umwälzvorrichtung (60) umfassenden Ringdüseninnenbereich (230) und einen äußeren, zylindermantelförmigen Ringdüsenaußenbereich (240) zwischen einer Ringdüsenaußenwand (250) und einer Reaktorinnenwand (110) im Reaktorgehäuse (20) ausbildet und ein oder mehrere Ringdüsenschlitze (260) aufweist.

4. Vorrichtung nach Anspruch 3, wobei
a) die Ringdüse (200) im Bereich des oberen Ringdüsenabschlusses (220) an der Ringdüsenaußenwand (250) eine Vorrichtung zur Aufnahme eines Dichtmittels (270) aufweist, wobei das Dichtmittel dazu eingerichtet ist die Ringdüsenaußenwand (240) gegenüber der Reaktorinnenwand (110) gasdicht abzudichten;
b) die Ringdüse (200) im Bereich des unteren Ringdüsenabschlusses (210) den Reaktorboden (30) kontaktiert und im Bereich des unteren Ringdüsenabschlusses (210) ein oder mehrere Ringdüsenschlitze (260) aufweist, wobei die Ringdüsenschlitze (260) dazu eingerichtet sind einen Durchtritt des beladenen Trägergasstromes durch die Ringdüse (200) zu ermöglichen;
c) die Ringdüse (200) sich vollständig über den Trägergaseinlass (90) erstreckt.

5. Vorrichtung nach einem der Ansprüche 1 oder 2, wobei der Trägergasstrom durch mehrere Trägergaseinlässe (90) in das Reaktorgehäuse (20) geführt wird, wobei die Trägergaseinlässe (90) im unteren Drittel des Reaktorgehäuses (20) und ringförmig in der Reaktorwand (50) angeordnet sind, wobei die Trägergaseinlässe (90) bezogen auf die Flächennormale der Reaktorinnenwand (110) an dieser Stelle einen Winkel von größer oder gleich 5° und kleiner 90° in Richtung des Reaktorbodens (30) einschließen.

6. Vorrichtung nach einem der vorhergehenden Ansprüche, wobei im Reaktorgehäuse (20) eine zylindrisch ausgeformte und zumindest einen Teil der Umwälzvorrichtung (60) umfassende und sich in axialer Richtung in Richtung des Reaktordeckels (40) erstreckende Transporthülse (300) angeordnet ist, wobei die Transporthülse (300) eine oder mehrere Auswurföffnungen (310) aufweist, wobei die Auswurföffnungen (310) dazu eingerichtet sind mit Nanopartikeln beladenes, partikuläres Schüttgut aus dem Innenvolumen der Transporthülse (300) in Richtung Reaktorinnenwand (110) zu befördern.

7. Vorrichtung nach einem der vorhergehenden Ansprüche, wobei das höhenbezogene Verhältnis aus dem maximalen Außendurchmesser der Umwälzvorrichtung (60) zu einem Innendurchmesser des Reaktorgehäuses (20), berechnet nach dem Außendurchmesser der Umwälzvorrichtung (60) in dieser Höhe dividiert durch den Innendurchmesser des Reaktorgehäuses (20) in dieser Höhe, größer oder gleich 0,4 und kleiner 1,0 beträgt.

8. Vorrichtung nach einem der vorhergehenden Ansprüche, wobei der Trägergaseinlass (90) kleiner oder gleich einem halben Reaktorinnendurchmesser vom Reaktorboden (30) entfernt in der Reaktorwand (50) angeordnet ist.

9. Vorrichtung nach einem der vorhergehenden Ansprüche, wobei ein sich zum Reaktorboden (30) hin erstreckender Teil eines untersten Mischblatts (80) der Umwälzvorrichtung (60) zum Reaktorboden (30) hin einen Spalt ausbildet, wobei der Spalt eine Höhe von größer oder gleich 100 µm und kleiner oder gleich 1,5 mm aufweist.

10. Vorrichtung nach einem der vorhergehenden Ansprüche, wobei ein Abstand in axialer Richtung zwischen einer Transporthülseninnenwand und einem äußersten Durchmesser der Mischblätter (80) der Transportvorrichtung (60) größer oder gleich 100 µm und kleiner oder gleich 2 mm beträgt.

11. Verfahren zur Beladung eines partikulären Schüttguts mit Nanopartikeln aus einem Trägergasstrom, **dadurch gekennzeichnet, dass** das Verfahren mindestens die Verfahrensschritte umfasst:
i) Bereitstellen eines partikulären Schüttgutes in einer Vorrichtung (10) nach einem der vorhergehenden Ansprüche;
ii) Leiten eines nanopartikelbeladenen Trägergasstrom durch den Trägergaseinlass (90) in die Vorrichtung (10) und durch das bewegte, partikuläre Schüttgut, wobei zumindest ein Teil der Nanopartikel aus dem Trägergasstrom auf der Oberfläche des partikulären Schüttguts abgeschieden wird;
iii) Entnehmen des mit Nanopartikeln beladenen Schüttgutes aus dem Reaktorgehäuse (20).

12. Verfahren nach Anspruch 11, wobei während der Beladung die Symmetrieachse der Umwälzvorrichtung (60) so ausgerichtet wird, dass diese eine Abweichung von größer oder gleich 0° und kleiner oder gleich 20° in Bezug auf einen Vektor der Schwerebeschleunigung der Erde an dieser Stelle aufweist.

13. Verwendung eines Verfahren nach einem der Ansprüche 11 oder 12 zur Herstellung mit Nanopartikeln an der Oberfläche beladener Partikel.

14. Verwendung nach Anspruch 13, wobei die Nanopartikel ausgesucht sind aus der Gruppe bestehend aus Katalysatoren, Düngemitteln, Pflanzenschutzmitteln, Mikronährstoffen, antibakteriell ausgerüsteten Trägern, Sensorpartikeln, hitze- und strahlungsschützenden Werkstoffen, Kosmetikprodukten, Medizinprodukten, Arzneimitteln, Batteriematerialien, Werkstoffen für die additive Fertigung.
